(19) Europäisches Patentamt

European Patent Office

Office européen des brevets

(11) Numéro de publication: **0 161 958**
**B1**

(12) **FASCICULE DE BREVET EUROPEEN**

(45) Date de publication du fascicule du brevet: **12.09.90**

(21) Numéro de dépôt: **85400694.7**

(22) Date de dépôt: **09.04.85**

(51) Int. Cl.⁵: **G 09 F 15/00** // F16B5/06

(54) **Panneau de signalisation routière.**

(30) Priorité: **18.04.84 FR 8406112**

(43) Date de publication de la demande:
**21.11.85 Bulletin 85/47**

(45) Mention de la délivrance du brevet:
**12.09.90 Bulletin 90/37**

(84) Etats contractants désignés:
**BE CH DE GB IT LI NL SE**

(56) Documents cités:
**DE-A-2 134 575**
**FR-A-1 113 485**
**FR-A-2 383 345**
**GB-A-1 496 489**
**GB-A-2 039 119**
**US-A-3 969 866**

**ALUMINIUM SUISSE, vol. 13, no. 5, septembre 1963, pages 169-173; P. FREY: "Panneaux de signalisation de grandes dimensions pour autoroutes, système "Menziken"**

(73) Titulaire: **Cormier, Bernard**
**42, rue Manin**
**F-75019 Paris (FR)**

(72) Inventeur: **Cormier, Bernard**
**42, rue Manin**
**F-75019 Paris (FR)**

(74) Mandataire: **Faber, Jean-Paul**
**CABINET FABER 35, rue de Berne**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne la fabrication des panneaux de signalisation des réseaux routiers notamment.

L'invention vise, plus particulièrement les panneaux destinés à équiper les autoroutes et qui ont des dimensions importantes.

La technique antérieure connait notamment le brevet GB no 2 039 119 qui décrit un panneau formé de plusieurs éléments assemblés côte à côte, l'un des éléments comportant le long d'un bord un canal en C et le long du bord opposé une partie en U destinée à recevoir deux languettes d'un élément en C. Un tel panneau est formé, d'une part, d'un flan et, d'autre part, de trois pièces différentes qui sont profilées et fixées par rivetage ce qui conduit à une fabrication compliquée et à un montage onéreux.

On connait également des profilés emboîtés côte à côte avec des éléments d'emboîtement cylindrique de manière que l'assemblage s'effectue, les profilés étant présentés sensiblement perpendiculairement et pivotés ensuite pour être alignés. Compte tenu de ce montage au droit de l'assemblage de deux éléments entre eux est ménagé un espace qui ne permet pas de fixer un film rétro-réfléchissant en un seul morceau couvrant l'ensemble du panneau. De plus, ces profilés ne comportent aucun moyen pour leur fixation sur des poteaux (voir brevet français no 2 383 345).

La revue Aluminium Suisse Vol. 13 No 5 de Septembre 1963 décrit des profilés d'aluminium obtenus par extrusion présentant une face plane et dont l'un des bords forme un élément mâle, tandis que le bord opposé forme un élément femelle correspondant. On juxtapose ainsi deux ou trois profilés pour réaliser un panneau en introduisant un élément mâle d'un profilé dans l'élément femelle d'un profilé adjacent. L'élément mâle est formé par un profilé à section en U et l'élément femelle par un profilé de même section mais légèrement plus grand, l'élément femelle présentant des rainures et l'élément mâle des redans destinés à coopérer avec les rainures. Comme il faut un petit jeu pour permettre l'assemblage des profilés, le panneau obtenu n'est pas très rigide. Cet inconvénient est accru par le fait que la branche femelle tournée du côté dorsal du panneau est conformée pour présenter un élément à section en C destiné à recevoir la tête d'un boulon pour la fixation sur des poteaux, le serrage du boulon tendant à écarter la branche correspondante du U femelle.

Un tel panneau prévoit de fixer, sur la face plane de chacun des profilés, un film rétro-réfléchissant qui porte les signes de la signalisation, les différents films juxtaposés sur la face plane des différents profilés constituant un même panneau formant les signes de la signalisation.

Les panneaux de signalisation routière sont soumis aux intempéries, au vent et aux vibrations engendrées par le passage des véhicules et, après un certain temps, l'assemblage des profilés prend du jeu et les bords des films rétro-réfléchissants correspondant à deux bords ajdacents de deux profilés voisins sont rapidement endommagés de sorte que les panneaux deviennent peu visibles et se détériorent dans un court laps de temps.

La présente invention a notamment pour but de remédier à cet inconvénient.

Le panneau, selon l'invention est du type formé d'une série de profilés assemblés les uns contre les autres pour former, sur une face, une large surface plane destinée à recevoir un film rétro-réfléchissant couvrant cette surface plane et comportant des repères de signalisation, chaque profilé (A) présentant en section une âme principale pourvue à une extrémité d'une première partie en U avec deux branches, l'une de celle-ci étant située dans le plan de l'âme, tandis que l'autre branche est en saillie sur une autre face de l'âme et, à l'autre extrémité, une seconde partie en U, avec deux branches, une des branches étant située dans le plan de l'âme, tandis que l'autre branche est en saillie sur l'autre face de l'âme qui est pourvue du côté des branches des parties en U opposées à celles situées dans le plan de l'âme d'une partie à section en C constituant une glissière, l'écartement des branches de la seconde partie en U étant tel qu'il permet l'emboîtement des branches de la première partie en U, la branche de la première partie en U est située dans le plan de l'âme et est terminée par une pointe, légèrement inclinée vers l'intérieur du U avec un ardillon tourné vers l'extérieur, l'autre branche de ladite première partie en U comportant une pointe correspondante avec un ardillon tourné vers l'extérieur du U, tandis que les branches de la seconde partie en U comportent chacune à leur extrémité libre une pointe avec un ardillon tourné vers l'intérieur, les branches de la première partie en U comportant, au voisinage des ardillons, des rainures correspondant aux ardillons des branches de la seconde partie en U, ledit panneau étant caractérisé en ce que les faces internes des branches de ladite seconde partie en U étant pourvues d'appuis pour les extrémités libres externes des pointes des branches de la première partie en U, tandis que la partie à section en C constituant la glissière est située en un point intermédiaire médian entre les deux parties en U, le bord libre de celle-ci étant situé dans le plan des branches en saillie sur l'autre face de l'âme.

Grâce à cette disposition, on réalise un panneau monobloc, parfaitement rigide et indémontable. Ce panneau qui malgré les conditions d'utilisation auquel il est soumis ne risque pas de prendre du jeu, permet de poser un film rétro-réfléchissant en un seul morceau couvrant toute sa surface. Ainsi, on évite la détérioration de celui-ci le long des bords des profilés adjacents.

Enfin, pour terminer les côtés latéraux du panneau celui-ci peut comporter, sur chaque côté latéral, un profilé en L dont une branche est destinée à coopérer avec ledit côté, tandis que l'autre branche est destinée à porter contre les bords des profilés, cette autre dite aile étant percée de trous régulièrement espacés destinés à être traversés par des vis dont les têtes s'insèrent dans les glissières des différents profilés et sur lesquelles se vissent des écrous correspondants.

L'invention va maintenant être décrite avec plus de détails en se référant à un mode de réalisation particulier donné à titre d'exemple seulement et représenté aux dessins annexés, dans lesquels:

Figure 1 montre en perspective éclatée une partie d'un panneau, selon l'invention.

Figure 2 montre en coupe une partie du panneau.

Figure 3 montre en coupe un élément destiné à former le bord supérieur du panneau.

Figure 4 montre en perspective le panneau réalisé, selon l'invention.

Pour réaliser un panneau, selon l'invention, on utilise une série de profilés désignés par la référence générale A.

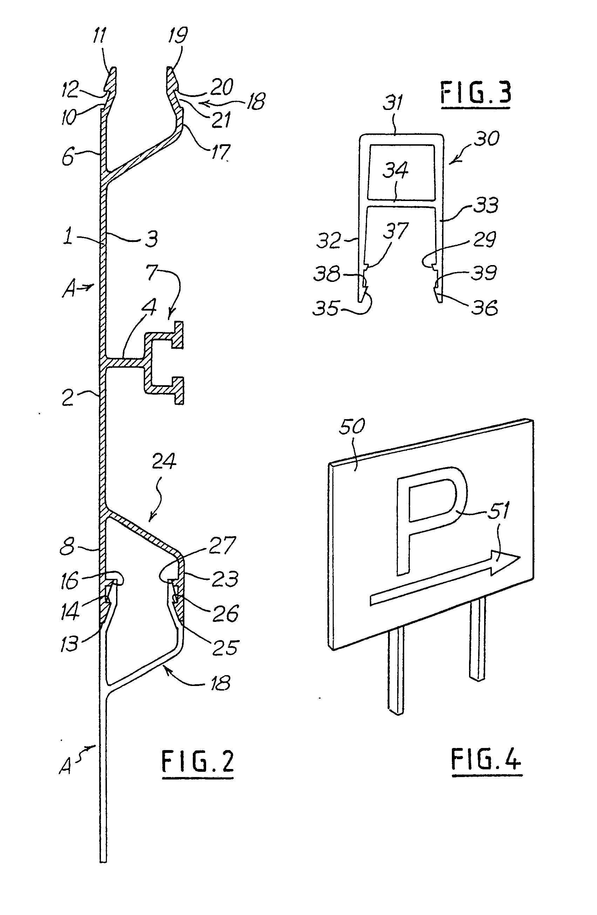

Chaque profilé A, (voir figure 2) comprend une âme principale 1 avec d'un côté une face plane 2 destinée lorsque ledit profilé est assemblé avec d'autres profilés identiques à constituer la face frontale du panneau. Sur une face 3 de chaque profilé A opposée à la face 2 s'étend, en un point intermédiaire médian, un voile 4 dont le bord libre est solidaire d'un élément à section en C 7 formant une glissière destinée à recevoir des écrous ou des têtes de vis.

L'une des extrémités de l'âme principale 1 est terminée par une partie en U 18 dont l'une des branches 6 est située dans le plan de la face 2, cette branche étant terminée par une rainure 10 décalée vers la face 3 et prolongée par une partie en forme de pointe 11 avec un ardillon 12.

La seconde branche 17 de la partie en U 18 est terminée par une pointe 19 avec un ardillon 20 et une rainure 21 correspondant à la rainure 10.

Le bord de la face 2, opposé à celui pourvu de la rainure 10, est terminé par une branche 8 d'une seconde partie à section en U 24.

La partie à section en U 24 comporte une seconde branche 23, ces branches 8 et 23 étant au voisinage de leur extrémité libre terminées par des pointes respectivement 13 et 25, avec, tournés du côté interne, des ardillons respectivement 14 et 26.

La face interne de la branche 8 comporte un appui 16, un appui correspondant 27 étant prévu sur la face interne de la branche 23. Les appuis 16 et 27 sont situés à une distance des ardillons 14 et 26 correspondant à la longueur des pointes 11 et 19.

La rainure 10 a une profondeur et une inclinaison telle qu'elle peut contenir la pointe 13 et l'ardillon 14 d'un profilé 1 adjacent, afin que les faces 2 de ceux-ci viennent se situer dans le prolongement l'une de l'autre dans un même plan.

Pour réaliser un panneau de signalisation, tel que celui représenté à la figure 4, on assemble plusieurs profilés A en engageant dans l'élément en U 24 l'élément en U 18 du profilé voisin de manière que les ardillons 20 et 26 coopèrent entre eux, tandis que les ardillons 12 et 14 portent l'un contre l'autre, les pointes 13 et 25 venant s'emboîter dans les rainures correspondantes 10 et 21 et les pointes 11 et 19 portant contre les appuis 16 et 27.

Un tel assemblage s'effectue à la presse par simple déformation élastique des éléments en U 18 et 24 et on réalise ainsi un panneau rigide parfaitement indéformable et indémontable.

Le panneau est complété par un profilé 30 (voir figure 3 qui vient terminer le bord supérieur).

Le profilé 30 a une section en U avec une âme 31 et deux ailes 32 et 33, les ailes étant reliées par un voile 34. L'aile 32 est terminée, à son bord libre, par une pointe 35 avec un ardillon interne 38, l'aile 33 étant similaire avec une pointe 36 et un ardillon interne 39. Il est également prévu des appuis 37 et 29 pour les pointes 11 et 19.

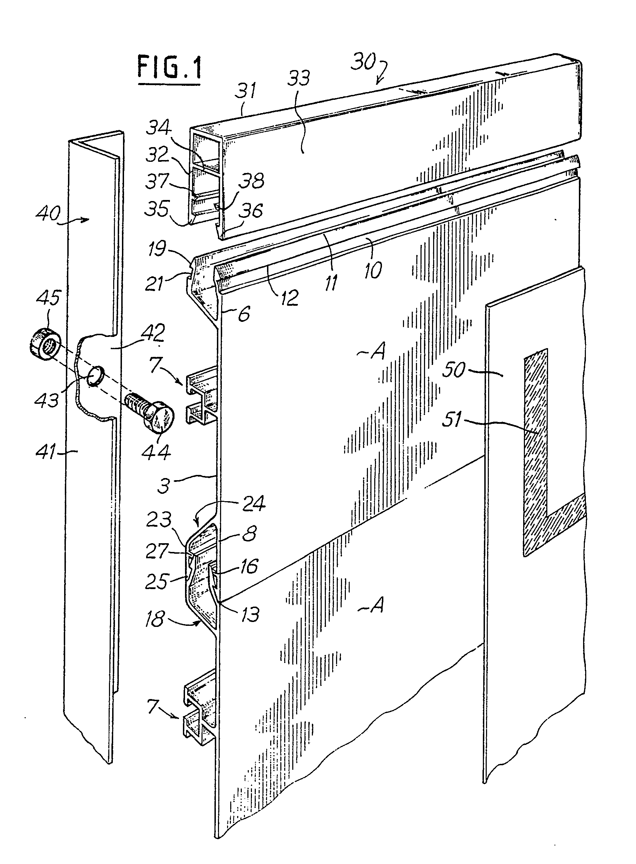

Le profilé 30 se monte en engageant, moyennant une déformation élastique des pointes 11 et 19, entre les ailes 32 et 33 de manière que l'ardillon 38 coopère avec l'ardillon 20 et que l'ardillon 39 porte contre l'ardillon 12 (voir figure 1).

Enfin, il est prévu de chaque côté du panneau un profilé à section en L 40 avec une branche 41 destinée à venir porter contre l'un des bords verticaux dudit panneau et une branche 42 qui vient s'appliquer contre l'élément en C 7, les ailes 23 des parties en U 24 et la surface latérale externe de l'aile 32 du profilé 30, ladite branche 42 comportant des trous 43 régulièrement espacés, l'espacement correspondant à la distance des glissières 7 des différents profilés 1 assemblés. Les trous 43 sont traversés par des vis 44 dont les têtes s'insèrent dans les glissières 7, lesdites vis recevant des écrous 45.

Sur les faces 2 des différents profilés est collé à chaud ou à froid un film rétro-réfléchissant 50 à haute intensité, par exemple, portant les signes 51 de signalisation du panneau.

On conçoit que le panneau formé des différents profilés A, 30 et 40 constitue un ensemble parfaitement rigide et monobloc. Le film 50 étant formé d'un seul morceau recouvrant l'ensemble dudit panneau, on évite toutes les détériorations éventuelles lors de la pose.

**Revendications**

1. Panneau de signalisation routière du type formé d'une série de profilés (A) assemblés les uns contre les autres pour former, sur une face, une large surface plane destinée à recevoir un film rétro-réfléchissant couvrant cette surface plane et comportant des repères de signalisation, chaque profilé (A) présentant en section une âme principale (1) pourvue à une extrémité d'une première partie en U (18) avec deux branches (6 et 17), l'une de celle-ci étant située dans le plan de l'âme (1), tandis que l'autre branche (17) est en saillie sur une autre face de l'âme (1) et, à l'autre extrémité, une seconde partie en U (24) avec deux branches (8-23), une des branches (8) étant située dans le plan de l'âme (1), tandis que l'autre (23) est en saillie sur l'autre face de l'âme (1) qui est pourvue du côté des branches des parties en U (18-24) opposées à celles situées dans le plan de l'âme (1) d'une partie à section en C (7) constituant une glissière, l'écartement des branches (8, 23) de la seconde partie en U (24) étant tel qu'il permet l'emboîtement des branches de la première partie en U (18), la branche (6) de la première partie en U (18) est située dans le plan de l'âme (1) et est terminée par une pointe (11), légèrement inclinée vers l'intérieur du U avec un ardillon (12) tourné vers l'extérieur, l'autre branche (17) de ladite première partie en U (18) comportant une pointe correspondante (19) avec un ardillon (20) tourné vers l'extérieur du U, tandis que les branches (8-23) de la seconde partie en U comportent chacune à leur extrémité libre, une pointe (13 et 25) avec un ardillon (14, 26) tourné vers l'intérieur, les branches (6-17) de la première partie en U (18) comportant, au voisinage des ardillons (12, 20), des rainures (10, 21) correspondant aux ardillons (14, 26) des branches (8, 23) de la seconde partie en U (24) caractérisé en ce que les faces internes des branches de ladite seconde partie en U (24) sont pourvues d'appuis (16-27) pour les extrémités libres externes des pointes (11, 19) des branches de la première partie en U (18), tandis que la partie à section en C (7) constituant la glissière est située en un point intermédiaire médian entre les deux parties en U (18 et 24), le bord libre de celle-ci étant situé dans le plan des branches (23) en saillie sur l'autre face de l'âme (1).

2. Panneau de signalisation routière, selon la revendication 1, caractérisé en ce qu'il comporte sur chaque côté latéral un profilé en L (40) dont une branche (41) est destinée à coopérer avec ledit côté, tandis que l'autre branche (42) est destinée à porter contre les bords des profilés (A), l'autre dite branche (42) étant percée de trous (43), régulièrement espacés, et destinés à être traversés par des vis (44) dont les têtes s'insèrent dans les glissières (7) des différents profilés (1) et sur lesquelles se vissent des écrous (45) correspondants.

**Patentansprüche**

1. Verkehrszeichenschild mit mehreren Profilen (A), die miteinander verbunden sind, um auf einer Seite eine große Fläche zu bilden, die zur Aufnahme einer rückstrahlenden Folie vorgesehen ist, die diese ebene Fläche bedeckt und Hinweiszeichen aufweist, wobei jedes profil (A) im profilquerschnitt einen zentralen Hauptteil aufweist, der an einem Ende mit einem ersten U-Profilteil (18) mit zwei Schenkeln (6 und 17) versehen ist, von denen einer in der Ebene des Hauptteils (1) gelegen und der andere Schenkel (17) in Richtung auf eine andere Seite des Hauptteiles (1) vorspringend ausgebildet ist, der an seinem anderen Ende einen zweiten U-Profilteil (24) mit zwei Schenkeln (8-23) aufweist, von denen ein Schenkel (8) in der Ebene des Hauptteils (1) gelegen und der andere (23) gegen die andere Seite des Hauptteils (1) vorspringend ausgebildet ist, der auf der Seite der Schenkel der U-Profilteile (18-24), die zu derjenigen Seite entgegengesetzt ist, in der die Ebene des Hauptteils (1) liegt, mit einem C-Profilteil (7) versehen ist, das eine Schiene bildet, wobei der Abstand der Schenkel (8, 23) des zweiten U-Profilteiles (24) so gewählt ist, daß ein Einstecken der Schenkel des ersten U-Profilteils (18) möglich ist, wobei der Schenkel (6) des ersten U-Profilteils (18) in der Ebene des Hauptteils (1) liegt und in einem spitz zulaufenden Teil (11) endigt, der gegen das Innere des U's leicht geneigt und mit einer nach einwärts gekehrten Halteschulter (12) versehen ist, wobei der andere Schenkel (17) des genannten ersten U-Profilteiles (18) einen entsprechenden, spitz zulaufenden Teil (19) mit einer Halteschulter (20) aufweist, die der Außenseite des U's zugekehrt ist, und die Schenkel (8-23) des zweiten U-Profilteils an ihren freien Enden je einen spitz zulaufenden Teil (13 und 25) mit einer Halteschulter (14, 26) aufweisen, die der Innenseite zugekehrt sind, wobei die Schenkel (6-17) des ersten U-Profilteiles (18) in der Nähe der Halteschultern (12, 20) Nuten (10, 21) aufweisen, die entsprechend den Halteschultern (14, 26) der Schenkel (8, 23) des zweiten U-Profilteiles (24) ausgebildet sind, dadurch gekennzeichnet, daß die Innenseiten der Schenkel des genannten zweiten U-Profilteiles (24) mit Abstützungen (16-27) für die freien äußeren Enden der spitz zulaufenden Teile (II, 19) der Schenkel des ersten U-Profilteiles (18) versehen sind und daß der im Querschnitt C-förmige Profilteil (7), der die Schiene bildet, an einer in der Mitte zwischen den beiden U-Profilteilen (18 und 24) befindlichen Stelle angeordnet ist, wobei der freie Rand desselben in der Ebene des in Richtung auf die andere Seite des Hauptteils (1) vorspringenden Schenkels (23) liegt.

2. Verkehrszeichenschild nach Anspruch 1, dadurch gekennzeichnet, daß es an jedem seitlichen Rand ein L-Profil (40) aufweist, dessen einer Schenkel (41) für die Zusammenwirkung mit dem genannten Rand und dessen anderer Schenkel (42) für die Anlage an den Rändern der Profile (A) vorgesehen ist, wobei der genannte andere Schenkel (42) von Bohrungen (43) durchbrochen ist, die in regelmäßigen Abständen angeordnet und dazu bestimmt sind, von Schrauben (44) durchgriffen zu werden, deren Köpfe in den Schienen (7) der einzelnen Profile (1) sitzen und auf die entsprechende Muttern (45) geschraubt sind.

**Claims**

1. Road sign panel of the type formed by a series of sectional parts assembled to form on one face a wide flat surface designed to receive a reflective film covering this flat surface and having reference marks, each sectional part (A) having, in cross section, a main web (1) provided at one end with a U-shaped first part (18) having two branches (6 and 17), one of the latter being situated in the plane of the web (1) while the other branch (17) projects from another face of the web (1), and provided at the other end with a second U-shaped part (24) having two branches (8-23), one of the branches (8) being situated in the plane of the web (1) while the other (23) projects from the other face of the web (1), which is provided, on the same side as those branches of the U-shaped parts (18-24) which are opposite to those situated in the plane of the web (1), with a C-shaped sectional part (7) constituting a slide, the distance between the branches (8, 23) of the second U-shaped part (24) being such as to enable the branches of the first U-shaped part (18) to fit into it, and the branch (6) of the first U-shaped part (18) is situated in the plane of the web (1) and terminates in a point (11) slightly inclined towards the inside of the U and having a barb (12) directed towards the outside, while the other branch (17) of the said U-shaped part (18) comprises a corresponding point (19) with a barb (20) directed towards the outside of the U, while the branches (8-23) of the second U-shaped part each comprise at their free end a point (13 and 25 respectively) with a barb (14 and 26 respectively) directed towards the inside, while the branches (6-17) of the first U-shaped part (18) are provided, in the vicinity of the barbs (12, 20), with grooves (10, 21) corresponding to the barbs (14, 26) of the branches (8, 23) of the second U-shaped part (24), characterized by the fact that the internal faces of the branches of the said second U-shaped part (24) are provided with supports (16-27) for the free outer ends of the points (11, 19) of the branches of the first U-shaped part (18) while the part (7) of C-shaped cross section forming the slide is situated at an intermediate point half-way between the two U-shaped parts (18 and 24) and has its free edge situated in the plane of the branches (23) projecting from the other face of the web (1).

2. Road sign panel in accordance with Claim 1, characterized by the fact that it comprises, on each lateral side, an L-shaped sectional part (40) of which one branch (41) is designed to interact with the said side while the other branch (42) is designed to bear against the edges of the sectional parts (A), the said other branch (42) being perforated with holes (43) evenly spaced apart to receive screws (44) of which the heads are inserted into the slides (7) of the various sectional parts (1) and onto which are placed corresponding nuts (45).

FIG.1

FIG.2

FIG.3

FIG.4